# EUROPEAN PATENT SPECIFICATION

(11) **EP 2 923 222 B1**
(45) Date of publication and mention of the grant of the patent: **03.07.2019**
(21) Application number: 13857335.7
(22) Date of filing: 13.11.2013
(51) Int. Cl.: G01V 1/28, G01V 1/32, G01V 1/40, G01V 1/30, G01V 1/36

(54) **PROCESSING MICROSEISMIC DATA**
VERARBEITUNG VON MIKROSEISMISCHEN DATEN
TRAITEMENT DE DONNÉES MICROSISMIQUES

(30) Priority: 21.11.2012 GB 201220933
(43) Date of publication of application: 30.09.2015
(73) Proprietor: WesternGeco Seismic Holdings Limited, Road Town, Tortola (VG)
(72) Inventor: PROBERT, Anthony, Cambridge Cambridgeshire CB3 0EL (GB)
(74) Representative: Schlumberger Intellectual Property Department
(86) International application number: PCT/IB2013/060107
(87) International publication number: WO 2014/080320

(56) References cited:
- WO-A1-2012/139082
- US-A- 5 377 104
- US-A1- 2009 299 637
- US-A1- 2010 238 765
- US-A1- 2010 302 905
- US-A1- 2010 302 905
- US-A1- 2011 272 147
- US-A1- 2011 286 306
- US-A1- 2012 116 681
- PETER C. LUH ET AL: "Alignment intensity for discriminating Good , Bad , and Ugly microseismic hypocenters", SEG TECHNICAL PROGRAM EXPANDED ABSTRACTS 2012, 1 September 2012 (2012-09-01), pages 1-5, XP055279153, DOI: 10.1190/segam2012-1397.1
- DONGHONG PEI ET AL: "Velocity Calibration for Microseismic Monitoring: Applying Smooth Layered Models With and Without Perforation Timing Measurements", SPE ANNUAL TECHNICAL CONFERENCE AND EXHIBITION, 1 January 2008 (2008-01-01), XP055278750, DOI: 10.2118/115722-MS

## Description

### BACKGROUND

Embodiments of the present invention relate to methods and systems associated with processing microseismic data.

The characterisation of subsurface strata is important for identifying, accessing and managing reservoirs. The depths and orientations of such strata can be determined, for example, by seismic surveying. This is generally performed by imparting energy to the earth at one or more source locations, for example, by way of controlled explosion, mechanical input etc. Return energy is then measured at surface receiver locations at varying distances and azimuths from the source location. The travel-time of energy from source to receiver, via reflections and refractions from interfaces of subsurface strata, indicates the depth and orientation of the strata.

Microseismic measurements can be characterized as a variant of seismics. In conventional seismic explorations a seismic source placed at a predetermined location, such as one or more airguns, vibrators or explosives, is activated and generates sufficient acoustic energy to cause acoustic waves to travel through the Earth. Reflected or refracted parts of this energy are then recorded by seismic receivers such as hydrophones and geophones.

In microseismic monitoring (sometimes referred to as "passive" seismic monitoring) there is usually no actively controlled and triggered seismic source at a known location. The seismic energy is generated through so-called microseismic events caused by subterranean shifts and changes that at least partially give rise to acoustic waves which in turn can be recorded using suitable receivers. Microseismic events may be initiated by human activity disturbing the subterranean rock, e.g. as a consequence of injecting or extracting hydrocarbons, water, or CO2 at some subterranean formation, or as a result of controlled explosive detonations in a borehole, such as "perforation shots" or "string shots". However, microseismic events are quite different in scale from events caused by the operation of equipment provided as an active seismic source. Background information on instruments and methods for microseismic monitoring can be found for example in the United States patents Nos. 6,856,575, 6,947,843 and 6,981,550, published international applications WO2004/0702424 and WO2005/006020, and published United States application no. 2005/01900649 A1.

A specific field within the area of microseismic monitoring is the monitoring of hydraulic fracturing. Such a hydraulic fracturing operation includes pumping large amounts of fluid to induce cracks in the earth, thereby creating pathways via which the oil and/or gas may flow. These cracks either will be new fractures created in previously continuous rock or will be along pre-existing faults and fractures. In general, the pathways induced by hydraulic fracturing operations will be a combination of newly created cracks and along pre-existing faults and fractures. As and after a crack is generated, sand or some other proppant material is commonly injected into the crack to prevent it from closing completely when pumping stops. The proppant particles placed within the newly formed fracture keep it open as a conductive pathway for the oil and/or gas to flow into the wellbore. In the hydrocarbon industry, hydraulic fracturing of a hydrocarbon reservoir may be referred to as "stimulation" as the intent is to stimulate the production of the hydrocarbons.

In the field of microseismic monitoring the acoustic signals generated in the course of a fracturing operation, which are caused by the generation of new cracks or displacement along existing cracks, are treated as microseismic events. Such microseismic events may occur as and after material is/has been pumped into the earth. Use may also be made of other information available from the fracturing operation, such as timing, flow rate and pressure. A well-known example of a set of microseismic data is the Carthage Cotton Valley data, evaluated for example by James T. Rutledge and W. Scott Phillips in: "Hydraulic Stimulation of Natural Fractures as Revealed by Induced Microearthquakes, Carthage Cotton Valley Gas Field, East Texas", GEOPHYSICS Vol. 68, No 2 (March-April 2003), pp. 441-452, and Rutledge, J.T., Phillips, W.S. and Mayerhofer, M.J., "Faulting Induced by Forced Fluid Injection and Fluid Flow Forced by Faulting: An Interpretation of the Hydraulic Fracture Microseismicity, Carthage Cotton Valley Gas Field, Texas", BULLETIN OF THE SEISMOLOGICAL SOCIETY OF AMERICA, Vol. 94, No. 5, pp. 1817-1830, October 2004.

Microseismic monitoring of hydraulic fracturing is a relatively recent, but generally established technology. Sometimes, such monitoring is performed using a set of geophones located in a well in the proximity of the hydraulic fracturing. In microseismic monitoring, a hydraulic fracture is created down a borehole and data received from geophones, hydrophones and/or other sensors is processed to monitor the hydraulic fracturing. Typically the sensors are used to record microseismic data in the form of microseismic wavefields generated by the hydraulic fracturing. By inverting the obtained microseismic wavefields, locations of microseismic events may be determined as well as uncertainties for the determined locations, source mechanisms and/or the like.

The spatial and temporal location of an induced microseismic event can be used to image the dynamics of a fracture growth and to quantify the stress regime in the reservoir together with formation and fault properties. This enables the effectiveness and efficiency of fracturing operations to be optimized by providing reliable information on the in-situ and induced reservoir parameters, together with the distribution of solid material within the induced pathways. Experimental work on core samples of rock (see *for example* Fredd, C.N., McConnell, S.B., Boney, C.L. and England, K.W. (2000): "Experimental Study of Fracture Conductivity for Water-Fracturing and Conventional Fracturing Applications", Paper SPE 74138 presented at the 2000 SPE ROCKY MOUNTAIN REGIONAL/LOW PERMEABILITY RESERVOIRS SYMPOSIUM AND EXHIBITION, Denver, Colorado, 12-15 March) has shown that the conductivity of fractures is correlated to their width which in turn is strongly dependant on the type and amount of proppant within the fractures.

Recently the use of surface and/or shallow borehole seismic arrays has become more popular because of their economic efficiency. Unlike traditional downhole monitoring, it is possible to install tens, hundreds or even thousands of seismic sensors at the surface or at shallow depths. These generally provide superior azimuthal coverage of the energy radiated by microseismic events as compared to the coverage provided by one or two seismic arrays that are typically used in traditional downhole monitoring. However, at the same time, surface and/or shallow arrays tend to suffer from increased signal attenuation as a result of longer source and receiver distances, together with increased noise levels. Hence, improving the signal to noise ratio is a significant issue for improved event detection and characterization. US 5377104, US2010/302905 and XP055278750 each disclose methods using multiple perforations shots.

### SUMMARY

Determining a source location for a microseismic event occurring underground from microseismic data obtained by a plurality of receivers (which may be referred to as a "microseismic hypocentre estimation process") will usually involve use of a model that describes one or more properties relating to (*e.g.* influencing) the propagation of elastic waves from at least one source location (*e.g.* from each of a plurality of potential source locations) to the plurality of receivers. In a typical microseismic hypocentre estimation process, such a model will typically be used to calculate travel-times for elastic waves propagating from a plurality of potential source locations (e.g. arranged in a "grid" pattern) to each of the receiver locations.

Accurate localization of a microseismic event thus generally involves use of an accurate model that describes one or more properties relating to (e.g. influencing) the propagation of elastic waves from at least one source location (e.g. from each of a plurality of potential source locations) to a plurality of receivers. Two examples of a model that describes one or more properties relating to the propagation of elastic waves from at least one source location (e.g. from each of a plurality of potential source locations) to a plurality of receivers are a "velocity" model and a "total travel-time" model.

A velocity model typically describes the velocity of elastic waves in an underground region. In a simple form, a velocity model may assume a constant velocity throughout an underground region. In more complex forms, a velocity model may describe how velocity varies with position and direction in an underground region.

A total travel-time model typically describes total travel-times for elastic waves propagating from at least one source location (e.g. from each of a plurality of potential source locations) to each of a plurality of receivers, and is usually dependent on a spatial relationship (usually a horizontal offset distance) between source location and receiver location. A total travel-time model may, for example, involve a list, table and/or mathematical function. Examples of using total travel-time models in microseismic hypocentre estimation processes involve, for example, the source-scanning algorithm ("SSA") [1] and coalescence microseismic mapping ("CMM") [2].

For a microseismic hypocentre estimation processes that use surface receivers, a total travel-time model may be viewed as incorporating both a "move-out" model and a "static" model (which may sometimes be referred to as a "residual statics" or "residual-time" model).

A move-out model typically describes differences in travel-time for elastic waves propagating from at least one source location (e.g. from each of a plurality of potential source locations) to each of a plurality of receivers as dependent on a spatial relationship (usually a horizontal offset distance) between source location and receiver location. A move-out model can, for example, be approximated according to a hyperbolic expression (as is well-known), or can have a more accurate, e.g. non-hyperbolic or anisotropic form.

A "static" model typically describes differences in travel-time for elastic waves propagating from at least one source location (e.g. from each of a plurality of potential source locations) to each of a plurality of receivers as a consequence of localised variations at the plurality of receivers.

The inventor has observed that a model that describes one or more properties relating to the propagation of elastic waves from at least one source location (e.g. from each of a plurality of potential source locations) to a plurality of receivers (e.g. a static model or total travel-time model) can be determined from a microseismic event occurring at a known location, if the microseismic event provides observable signals and accurate arrival time differences for a wide-range of source-receiver offsets.

In most instances, the only readily available sub-surface sources of microseismic events with an accurately known location are perforation shots or string shots. However, perforation shots have a limited acoustic energy output and their source-time is often imprecise, and consequently, body-wave arrivals from these shots can be difficult to detect, particularly at large source-receiver offsets. Also, whilst perforation shots have a known source location, the signals produced can be weak and vary as a result of shot size, local borehole environment, ambient noise, receiver geometry, source radiation pattern, and source-receiver offsets. These factors make it difficult to determine a model that describes one or more properties relating to the propagation of elastic waves from a source location to a plurality of receivers from individual perforation shots.

To address the above-mentioned problems, the invention provides, in a first aspect, a method according to claim 1.

In aspects of the present invention the composite microseismic data may be used to inform about the "travel-times" or the "models", which can be used in a fracture monitoring process, for microseismic event location and/or the like. The composite microseismic data may have a higher signal to noise ratio compared with the individual subsets of microseismic data, and as such, may be more useful (compared to the individual subsets of microseismic data) in determining a model that describes one or more properties relating to the propagation of elastic waves from at least one source location to a plurality of receivers, e.g. a static model or total travel-time model. Further optional features of the first aspect of the invention will now be set out. These are applicable singly or in any combination with the first aspect of the invention.

In some aspects, the travel-time adjustments may be determined to correct for differences in travel-times (of elastic waves propagating from the known source locations to each of the plurality of receivers) caused by any differences in the known source locations, e.g. so as to help the subsets of microseismic data corresponding to the individual microseismic events to combine in an additive manner.

In some aspects, the travel-time adjustments may be determined using a model (which may be a move-out model, see below) that does not account for localised variations at the plurality of receivers. Herein, a "localised variations" may be viewed as any variations in an underground region close to the receivers that affects the travel-times of elastic waves to only a portion of (i.e. one or more of, but not all of) the receivers.

By way of example, the travel-time adjustments may be determined using a move-out model that describes differences in travel-time for elastic waves propagating from at least one source location (e.g. from each of a plurality of potential source locations) to each of a plurality of receivers as dependent on a spatial relationship (usually a horizontal offset distance) between source location and receiver location.

The move-out model used to determine the travel-time adjustments may comprise a "simple" move-out model that does not account for localised variations at the plurality of receivers. The simple move-out model could, for example, assume that elastic waves propagate with a constant velocity to each of the receivers. The simple move-out model could, for example, be approximated according to a hyperbolic expression (as is well-known), or could have a more accurate, e.g. non-hyperbolic or anisotropic form. Other models could equally be used to determine the travel-time adjustments, as would be apparent to the skilled person.

One advantage, among others, of determining the travel-time adjustments using a model that does not account for localised variations at the plurality of receivers is that the method can be performed with little or no knowledge of the underground region between the microseismic events and the plurality of receivers.

Moreover, if the travel-time adjustments are determined using a model that does not account for localised variations at the plurality of receivers, the composite microseismic data may reveal information about localised variations at the plurality of the receivers, which may be useful in constructing a model (e.g. a static model) that describes one or more properties relating to the propagation of elastic waves from at least one source location (e.g. from each of a plurality of potential source locations) to the plurality of receivers.

However, in other embodiments, the travel-time adjustments are determined using a model that does account for localised variations at the plurality of receivers, e.g. using a total travel-time model that accounts for such variations. In this case, the method may include using the composite microseismic data to test the accuracy of the model.

In some aspects, the distances between known source locations are small compared to the distances between the known source locations and the plurality of receivers. For example, the average distance between known source locations may be an order of magnitude (e.g. 10% or less) of the average distance between the known source locations and the plurality of receivers. In this way, the subsets of microseismic data are able to combine in an additive manner, even if the travel-time adjustments are determined using a model that does not account for localised variations at the plurality of receivers (see above).

This can be further explained by considering two microseismic sources at exactly the same location. Clearly, in this case, the relative travel-time delays (between microseismic sources) for all receiver locations would be identical. Next, consider that one of the two microseismic sources is moved a small distance from the other (i.e. with the displacement being small compared to the source-receiver separations). In this case, the local arrival time-delay variations at each receiver would remain the same except for a small time-correction caused by the source location change. This time-correction can easily be calculated using a correction determined using a simple move-out model based on the two known source locations, as described above. The simple move-out model used does not need to be accurate if the correction is small compared to the total travel-time. So, by observing, computing, or measuring the arrival-time difference at one, or several, locations the subsets of microseismic data corresponding to different microseismic events can be combined in an additive manner, without knowing any details of localised variations at the plurality of receivers (e.g. without knowing a subsurface velocity model, if the plurality of receivers are at the surface). This reasoning can be expanded to any number of microseismic sources, so long as the sources separations are relatively small compared to the distances between the known source locations and the plurality of receivers.

For the avoidance of any doubt, the travel-time adjustments may be zero for some combinations of source location and receiver. For example, the travel-time adjustments for all combinations of source location and receiver involving a chosen source location may be zero, with the travel-time adjustments involving other source locations being determined so as to correct for differences in travel-times (of elastic waves propagating from the other source locations to each of the plurality of receivers) caused by differences in the other source locations relative to the chosen source location. In this case, the travel-time adjustments may be referred to as "relative" travel-time adjustments.

Herein, the term "microseismic event" may be understood as an event which creates elastic waves underground, but whose effects at the surface of the earth are not discernible without specialist equipment. For example, a microseismic event may be defined as an event having a moment magnitude of less than zero. The moment magnitude scale is well understood by those in the art, and need not be explained further herein.

As would be appreciated by a skilled person, the elastic waves created by a microseismic event may include compressional waves ("p-waves" or "acoustic" waves) and/or shear waves ("s-waves"). For the purposes of this disclosure, the term "elastic wave" does not require the presence of both compressional and shear waves. That is, the term "elastic" wave may, in some cases, refer only to a p-wave or only to an s-wave.

In general, the microseismic data will include a plurality of waveforms, wherein each waveform has been obtained by a respective receiver. Thus, each subset of microseismic data will generally include a plurality of waveforms, wherein each waveform has been obtained by a respective receiver. A waveform obtained at a receiver is commonly referred to as a "trace". The variation of a waveform with time is often physically represented (e.g. on paper) by a "wiggle trace". It follows that a travel-time adjustment determined for a combination of source location and receiver, will in general be applied to the waveform which corresponds to the combination of source location and receiver, in the subset of microseismic data that corresponds to the combination of source location and receiver.

Herein, a "subset" of microseismic data corresponding to a microseismic event is preferably a portion of the microseismic data having at least some waveforms that contain a signal (e.g. a peak) caused by the arrival of an elastic wave created by that microseismic event at the receivers.

In some embodiments, the method may include using the composite microseismic data to determine one or more models that describe one or more properties relating to the propagation of elastic waves from at least one source location (e.g. from each of a plurality of potential source locations) to a plurality of receivers.

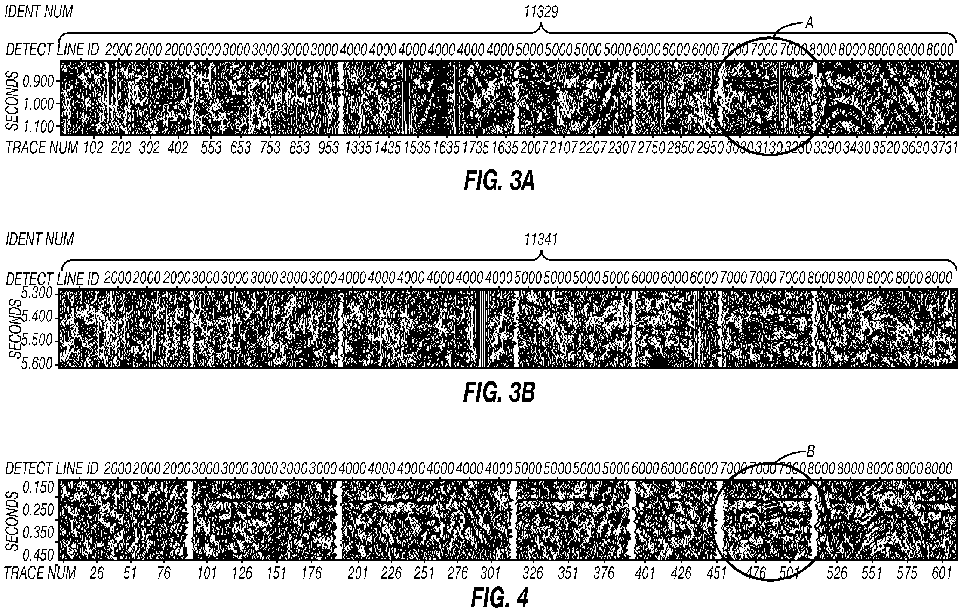

An example of a model that may be determined using the composite microseismic data is a "static" model which describes differences in travel-time for elastic waves propagating from at least one source location (e.g. from each of a plurality of potential source locations) to each of a plurality of receivers as a consequence of localised variations (e.g. near surface variations) at the plurality of receivers. Such a model could be determined, for example, in the manner described below with reference to Fig. 4.

In some aspects, a static model may associate a respective travel-time shift with each receiver. However, these travel-time shifts should not be confused with the "travel-time adjustments" (referred to above) that are determined based on a spatial relationship between the source location and receiver for each combination of source location and receiver.

Another example of a model that may be determined using the composite microseismic data is a total travel-time model which describes total travel-times for elastic waves propagating from at least one source location (e.g. from each of a plurality of potential source locations) to each of a plurality of receivers, and is usually dependent on a spatial relationship (usually a horizontal offset distance) between source location and receiver location. Such a model could be determined, for example, by combining a static model determined as described in the previous paragraph with a move-out model.

Combining the adjusted subsets of microseismic data to form composite microseismic data may be achieved in a variety of different ways. In some embodiments, combining the adjusted subsets of microseismic data includes summing and/or averaging the adjusted subsets of microseismic data. Other combinations (both linear and non-linear) of the subsets of microseismic data would also be possible. Combining the adjusted subsets of microseismic data may be described below as "stacking" the adjusted subsets of microseismic data.

In some aspects, some sort of time-aligning of the subsets of microseismic data may be needed in order to stack the subsets of microseismic data. Thus, the method may include time-aligning the subsets of microseismic data. This time-aligning of subsets of microseismic data may be performed before or after the application of travel-time adjustments.

By "time-aligning" the subsets of microseismic data, it is preferably meant aligning the subsets of microseismic data in time so that, for each subset of microseismic data, a signal caused by the microseismic event to which the subset of microseismic data corresponds, occurs at substantially the same time (which may be an arbitrary time). Whilst time-aligning the subsets of microseismic data may involve applying the same time shift to all the waveforms in a given subset of microseismic data, the step of "time-aligning" the subsets of microseismic data should not be confused with the application of "travel-time adjustments" (referred to above) that are determined based on a spatial relationship between the source location and receiver for each combination of source location and receiver.

Time-aligning the subsets of microseismic data may include:
for each subset of microseismic data, determining an arrival time at one or more of the receivers for an elastic wave caused by the microseismic event to which the subset of microseismic data corresponds; and
time-aligning the subsets of microseismic data based on the determined arrival times.

In certain embodiments, the arrival times may only need to be determined at one of the receivers, because any differences in arrival times at the receivers (for the different subsets of microseismic data) can usually be assumed to be the same, provided that the distances between known source locations are small compared to the distances between the known source locations and the plurality of receivers (see discussion above).

The arrival time of an elastic wave at a given receiver can most easily be determined from the waveform obtained by the receiver, e.g. by observing a signal in the waveform caused by the arrival of the elastic wave at the receiver. A detonation time could be used as a guide to find such a signal, as explained in more detail below.

Other ways of time-aligning the subsets of microseismic data would be apparent to a person skilled in the art. For example, the subsets of microseismic data could be time-aligned based on a respective time at which each microseismic event is initiated. However, this method would not be appropriate if the time at which each microseismic event was initiated is not accurately known. For example, for perforation shots, it is often only possible to obtain approximate detonation times which may not be adequately accurate for the purposes of time-aligning the subsets of microseismic data.

The method in accordance with an embodiment of the present invention may be a computer-based method.

The method in accordance with an embodiment of the present invention may include obtaining the microseismic data in addition to processing the microseismic data, in which case the method may be referred to as a method of obtaining and processing microseismic data.

A second aspect of the invention may provide a method of obtaining and processing microseismic data, wherein the method includes:
using a plurality of receivers to obtain microseismic data corresponding to two or more microseismic events occurring underground, wherein each microseismic event occurs, respectively, at a known source location; and
processing the microseismic data using a method according to the first aspect of the invention.

Further optional features of the second aspect of the invention will now be set out. These are applicable singly or in any combination with the second aspect of the invention.

In accordance with an embodiment of the present invention, the method may include initiating at least one of (possibly all of) the two or more microseismic events.

It follows that the term "microseismic event" is not intended to be limited to passive events, but may also include events that are deliberately initiated (as noted above, whether an event is "microseismic" depends on its magnitude, rather than whether it was caused deliberately).

In accordance with some embodiments of the present invention, at least one of (possibly all of) the two or more microseismic events is a "weak" microseismic event. A "weak" microseismic event may be defined as a microseismic event whose magnitude is such that a signal caused by the arrival of an elastic wave created by that microseismic event is not discernible in all waveforms obtained by the receivers, e.g. because the signal is obscured by noise in the waveforms obtained by a significant fraction (e.g. 50% or more, 80% or more, or even 90% or more) of the receivers. As noted above, the methods described herein can help to boost signal to noise ratio, and may therefore be particular useful with microseismic data corresponding to "weak" microseismic events.

In some embodiments, a signal caused by the arrival of an elastic wave created by each microseismic event is discernible in at least one waveform obtained by the receivers, e.g. since the arrival time of such a signal could be useful in time-aligning the subsets of microseismic data (see above). However, this is not a strict requirement, since even if a signal caused by the arrival of an elastic wave created by a microseismic event is not discernible in any waveforms obtained by the receivers, the subsets of microseismic data could be time-aligned in some other way, e.g. using detonation times (see above).

In some embodiments, at least one of (possibly all of) the two or more microseismic events is a perforation shot.

A perforation shot is a well-known microseismic event, usually initiated by firing a perforating gun. A normal purpose of a perforation shot is to make holes in a casing (usually made of steel) at known locations in the casing, so as to allow fluid in a reservoir to be pumped to the surface through the casing. A single perforation shot may contain one or more separate perforation charges that are arranged to be fired at the same time or over such a short time that they are substantially detected and recorded as a single source location. One or more perforation shots may be deployed at the same time in the same borehole and activated at the same time to provide a series of perforation holes in a section of that borehole. A group of perforation shots performed together can be called a perforation stage.

In some embodiments, perforation shots may be used as the microseismic events because a perforation shot is a localised microseismic event whose source location can be known to a reasonable level of accuracy. Also, perforation shots are routinely carried out in hydraulic fracturing operations, so the present method may be implemented using microseismic events that are normally initiated as part of a hydraulic fracturing operation. In more detail, perforation shots are routinely placed at intervals throughout a reservoir zone that is being hydraulically fractured, and this spatial extent allows the method to be extended or repeated using one or more perforation shots in each stage, and one or more stages, or any combination of shots and stages. The method could be extended to shots and stages in other, adjacent, or conveniently positioned boreholes.

A disadvantage of using perforation shots as the microseismic events is that these events are usually "weak", because the charges are usually designed to give maximum penetration through the casing and reservoir rock with the minimum physical displacement, i.e. minimum acoustic or elastic wave generation. The acoustic waves may also be generated by the evolution of expanding gases from the explosive charges within the borehole rather than the penetration of the casing itself. However, as explained above, the methods described herein can be particular useful in boosting the signal to noise ratio of microseismic data corresponding to "weak" microseismic events. Perforation shots have previously been discussed in the context of determining total travel-time models, see e.g. [6], [7], [8], [9]. However, as far as is known to the inventor, no-one has previously suggested combining subsets of microseismic data corresponding to different perforation shots as a way to determine such models.

In some embodiments, all of the two or more microseismic events may be perforation shots. However, the two or more microseismic events may potentially include any microseismic event whose source location can be known to a reasonable level of accuracy.

For example, the two or more microseismic events may include one or more string shots. However, string shots are generally not preferred to perforation shots because a string shot is usually designed to create a physical displacement in the borehole (i.e. to maximise acoustic or elastic signals) and for this reason they are typically located in a position outside of a reservoir interval, or in a separate borehole, to avoid disturbing the reservoir interval.

As another example, the two or more microseismic events may include at least one fracture event caused by one or more fracturing operations. The at least one fracture event may be a "weak" microseismic event (see above definition). A subset (or subsets) of microseismic data corresponding to the at least one fracture event may be combined with a subset (or subsets) of microseismic data corresponding to at least one perforation shot to form the composite microseismic data. This may help to substantiate whether the fracture event is "genuine" and may also help to test a proposed fracture event location, e.g. by deriving an estimate of the perforation shot arrival time from the newly formed composite microseismic data for comparison with arrival times for fracture events having a large signal to noise ratio.

In some embodiments,, the two or more microseismic events occur at different source locations, since two or more microseismic events in the same location could damage a reservoir. However, in some embodiments, the two or more microseismic events could occur at the same location but at different times.

If the two or more microseismic events are initiated at different source locations, the different source locations preferably have similar focal mechanisms. Otherwise, complicated corrections might be needed to facilitate combining the adjusted subsets of microseismic data corresponding to the different microseismic events in a useful manner. "Source focal mechanism" may be taken to mean the extent of deformation in the region of a source location. This can generally be described in terms of compression tension, and slip modes, with particular orientations.

The plurality of receivers may include a plurality of geophones (which may be single-component or multiple-component geophones), a plurality of accelerometers, a plurality of hydrophones, and/or a plurality of any other sensors that respond to the arrival of an elastic wave.

The plurality of receivers may be arranged in one or more receiver arrays, each receiver array including a plurality of receivers.

In some embodiments,, one or more of the receivers (or receiver arrays, if the plurality of receivers are arranged in one or more receiver arrays) are disposed at the surface. More preferably, all of the receivers are disposed at the surface. However, one or more of the receivers may be disposed underground, e.g. in a borehole. Recently the use of surface and/or shallow borehole microseismic arrays has become more popular because of their economy and insensitivity to certain noise modes.

A third aspect of the invention may provide a computer program comprising code which, when run on a computer, causes the computer to perform a method according to the first aspect of the invention.

Further optional features of the third aspect of the invention will now be set out. These are applicable singly or in any combination with the third aspect of the invention.

The third aspect of the invention may also provide a computer readable medium storing a computer program comprising code which, when run on a computer, causes the computer to perform a method according to the first aspect of the invention.

Herein, the term "computer" is intended to refer to any computing device, not just a general purpose computer.

A fourth aspect of the invention may provide an apparatus for performing a method according to the first or second aspect of the invention.

Further optional features of the fourth aspect of the invention will now be set out. These are applicable singly or in any combination with the fourth aspect of the invention.

The apparatus may include a computer configured to perform a method according to the first aspect of the invention (e.g. using a computer readable medium storing a computer code according to the third aspect of the invention).

The apparatus may include one or more microseismic sources configured to initiate two or more microseismic events underground, wherein each microseismic event is initiated, respectively, at a known source location. The apparatus may include a respective microseismic source for each microseismic event. The or each microseismic source may include a perforation gun, in which case the two or more microseismic events may be perforation shots.

The apparatus may include a plurality of receivers configured to obtain microseismic data corresponding to two or more microseismic events occurring underground, wherein each microseismic event occurs, respectively, at a known source location.

The plurality of receivers may include a plurality of geophones (which may be single-component or multiple-component geophones), a plurality of accelerometers, a plurality of hydrophones, and/or a plurality of any other sensors that respond to the arrival of an elastic wave.

One or more of the receivers (possibly all of the receivers) may be disposed at the surface and/or one or more of the receivers may be disposed underground.

A fifth aspect of the invention may provide one or more models that describe one or more properties relating to the propagation of elastic waves from at least one source location (e.g. from each of a plurality of potential source locations) to a plurality of receivers, wherein the one or more models have been determined by a method according to the first or second aspect of the invention.

The one or more models may include a static model and/or a total travel-time model, as discussed above.

A sixth aspect of the invention may provide a method of monitoring a hydraulic fracturing operation in an Earth formation using one or more models that describe one or more properties relating to the propagation of elastic waves from at least one source location (e.g. from each of a plurality of potential source locations) to a plurality of receivers, wherein the one or more models have been determined by a method according to the first or second aspect of the invention.

Further optional features of the sixth aspect of the invention will now be set out. These are applicable singly or in any combination with the sixth aspect of the invention.

The method of monitoring a hydraulic fracturing operation may include using the one or more models to determine a source location for a microseismic event occurring underground from microseismic data obtained by a plurality of receivers, e.g. by calculating travel-times for elastic waves propagating from a plurality of potential source locations (e.g. arranged in a "grid" pattern) to each of the receiver locations.

The invention also includes any combination of the aspects and preferred features described except where such a combination is clearly impermissible or expressly avoided.

### BRIEF DESCRIPTION OF THE DRAWINGS

The present disclosure is described in conjunction with the appended figures, where:
Fig. 1 is a schematic illustration of a system for obtaining microseismic data related to hydraulic fracturing that may be used in an embodiment of the present invention;
Fig. 2 is a flow chart showing a method of obtaining and processing microseismic data, in accordance with an embodiment of the present invention;
Fig. 3(a) and Fig. 3(b) respectively show subsets of microseismic data corresponding to two out of six perforation shots performed in a chosen perforation stage during an experiment, where data from such perforation shots may be used in an embodiment of the present invention;
Fig. 4 shows "stacked" microseismic data formed by averaging the six perforation shots performed in the chosen perforation stage during the experiment, where data from such perforation shots may be used in an embodiment of the present invention;
Fig. 5(a) and Fig. 5(b) compare, for a subset of receivers used in the experiment:
   (a) the "raw" subset of microseismic data obtained from a single perforation shot labelled "A" in Fig. 3(a); with
   (b) the stacked microseismic data labelled "B" in in Fig. 4
   where data from such perforation shots may be used in an embodiment of the present invention; and
Fig. 6 contains six panels, each panel showing, for a respective perforation shot in the chosen perforation stage, eleven partial-stacks of microseismic data formed by stacking waveforms that have been corrected using a static model determined from the stacked data shown in Fig. 4, in accordance with an embodiment of the present invention.

### DESCRIPTION

Specific details are given in the following description to provide a thorough understanding of the embodiments. However, it will be understood by one of ordinary skill in the art that embodiments maybe practiced without these specific details. For example, well-known circuits, processes, algorithms, structures, and techniques may be shown without unnecessary detail in order to avoid obscuring the embodiments.

Also, it is noted that embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

As disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

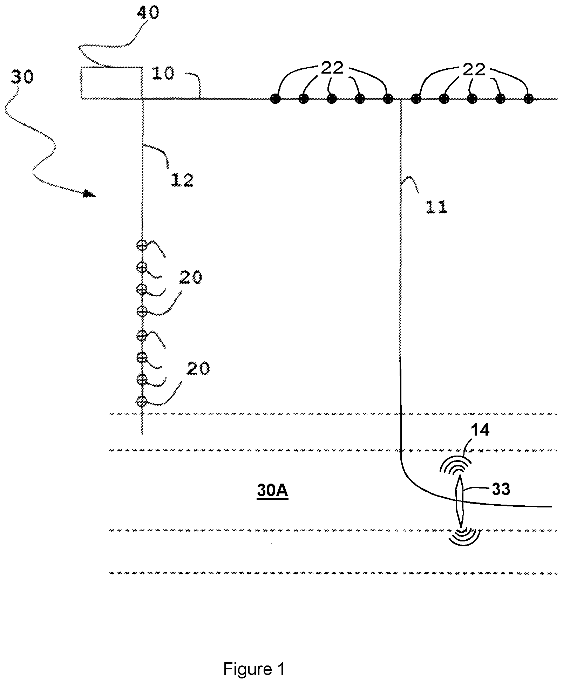

Fig. 1 is a schematic illustration of a system for obtaining microseismic data related to hydraulic fracturing.

A fracturing borehole 11 extends from a surface 10 through an Earth formation 30. A geophone or accelerometer receiver array 22 may be disposed at the surface 10, and/or in boreholes at shallow depths, typically less than 300m below the surface. Other geophone or accelerometer receiver arrays 20 may be disposed in one or more deeper monitoring boreholes 12 extending from the surface 10 through the Earth formation 30, and typically spaced hundreds of meters from the fracturing borehole 11. The geophone or accelerometer receiver arrays 20, 22 may each comprise a plurality of geophone receivers or accelerometers. Geophones or accelerometers in the geophone or accelerometer receiver arrays 20, 22 may be spaced of the order of tens of meters apart, or any separation. The geophones or accelerometers may be regularly or irregularly spaced.

During hydraulic fracturing, a fluid (not shown), which may include solid particles (e.g. a proppant), may be pumped from the surface 10 into the fracturing borehole 11 so as to cause the Earth formation 30 surrounding the fracturing borehole 11 to undergo a microseismic event, resulting in the generation of a fracture 33 in the Earth formation 30. In the hydrocarbon industry, the fluid may be pumped down the fracturing borehole 11 to provide for the fracturing of a hydrocarbon bearing layer 30A in the Earth formation 30. In such an arrangement where the portion of the Earth formation 30 being fractured is the hydrocarbon-bearing layer 30A, the fracture 33 is produced at least partially within the hydrocarbon-bearing layer 30A. By generating the fracture 33 at least partially within the hydrocarbon-bearing layer 30A, production channels may be set up in the hydrocarbon-bearing layer 30A allowing for flow of the hydrocarbons in the hydrocarbon-bearing layer 30A to the fracturing borehole 11.

One possibility is that the hydrocarbon-bearing layer is a shale. A reservoir which is a shale is generally of low permeability and is stimulated by fracturing in order to achieve production, but incorporates natural fractures which become connected to the newly-formed fracture.

During the fracturing process, elastic waves, including acoustic waves 14, may be generated by the fracture 33 and the acoustic waves 14 may propagate through the Earth formation 30 and be detected by the geophone or accelerometer receiver arrays 20, 22. As such, the geophone or accelerometer receiver arrays 20, 22 may be used to obtain induced motion data (microseismic data) related to the hydraulic fracturing procedure taking place in the fracturing borehole 11. Any geophone receivers in the geophone arrays may comprise three-component geophones and may provide directional (three-dimensional) data for the received acoustic waves 14. Alternatively or additionally, any geophone receivers in the geophone arrays may comprise one component geophones, usually arranged to measure the vertical component of the wavefield. The data received by the geophone or accelerometer receiver arrays 20, 22 may be recorded and then processed and/or transmitted to a processor 40 for processing.

Generally, the surface/shallow geophone or accelerometer receiver array 22 is less costly to set up than the deep array 20. However, the source mechanism of the microseismic event is one of the primary factors causing variations in the amplitude of the microseismic wave at or near the surface 10. The variation of the radiation pattern results largely from the difference in the fault plane parameters and amount of non-double couple component, the latter being particularly significant for hydraulic fracture induced microseismic events.

In general, the following discussion describes examples that involve stacking microseismic data corresponding to several weak microseismic events with known source locations using minimal velocity model information to construct a signal that has significantly improved SNR. This may allow individual events that are too weak to be useful themselves to be used in building and refining an accurate model that describes one or more properties relating to the propagation of elastic waves from at least one source location (e.g. from each of a plurality of potential source locations) to the plurality of receivers (e.g. a total travel-time or velocity model).

In the examples discussed below, waveforms caused by microseismic events at different source locations (with similar focal mechanisms) can be summed for all receivers using a simple move-out model and arrival time differences identified at only one receiver location. This requires no knowledge of an exact travel-time model, or localised variations at the plurality of receivers. For example, perforation shots from nearby locations can be added to improve SNR using only a simple move-out model, and an arrival time difference identified at only one receiver location. The improvement in SNR can be used to update the static and total travel-time models and therefore improve the detection and localization of other microseismic events.

In the specific example discussed below, this analysis was applied to the surface receivers but the method can be applied to data acquired using shallow well and deep borehole arrays, and potentially for different wave-modes, and perforations and other types of events.

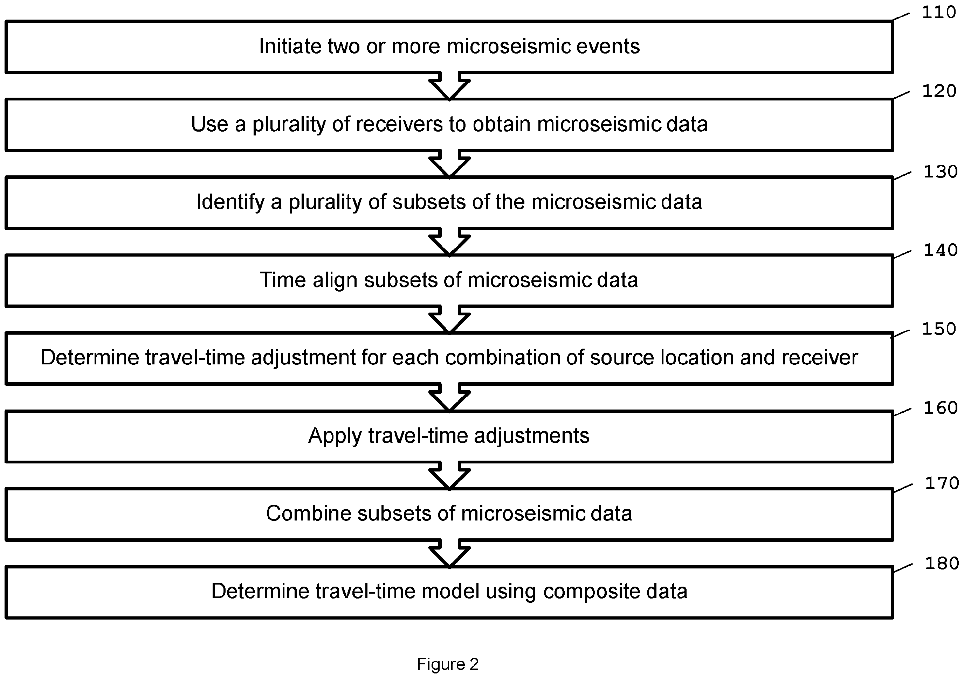

Fig. 2 is a flow chart showing a method of obtaining and processing microseismic data, in accordance with one embodiment of the present invention. The listed steps provide a method in accordance with one embodiment of the present invention. In other embodiments, the steps may be performed in a different order and in yet other embodiments, one or more of the listed steps may be optional and/or not performed.

In a first step 110, two or more microseismic events are initiated underground, wherein each microseismic event is initiated, respectively, at a known source location. The microseismic events are preferably perforation shots, each being initiated by firing a perforation gun.

In a second step 120, a plurality of receivers (e.g. geophones or accelerometers) are used to obtain microseismic data corresponding to the two or more microseismic events initiated in the first step 110.

In a third step 130, a plurality of subsets of the microseismic data are identified, wherein each subset of the microseismic data corresponds to a respective one of the microseismic events initiated in the first step 110.

In a fourth step 140, the subsets of microseismic data are time-aligned, e.g. using arrival times as described above.

As described above, the arrival time of an elastic wave at a given receiver can most easily be determined from the waveform obtained by that receiver, e.g. by observing a signal in the waveform caused by the arrival of the elastic wave at the receiver.

In the case of the microseismic events being perforation shots, an observer log may records the approximate detonation time for each perforation shot. In many cases, these detonation times will not, on their own, be reliable to time-align the subsets of microseismic data. However, the denotation time for each microseismic event, can be recorded electronically and used to guide the search for a signal caused by the body-wave arrival at the surface. Naturally, the body-wave arrives at a delayed time from the detonation time due to the travel-time from the perforation shot to the surface detectors.

In a fifth step 150, travel-time adjustments are determined for each combination of source location and receiver based on a spatial relationship (e.g. a horizontal offset distance) between the source location and the receiver, e.g. using a move-out model in a manner described above.

In a sixth step 160, the travel-time adjustments are applied to signals in the subsets of microseismic data, e.g. so as to correct for differences in travel-times (of elastic waves propagating from the known source locations to each of the plurality of receivers) caused by any differences in the known source locations, e.g. so as to help the subsets of microseismic data corresponding to the individual microseismic events to combine in an additive manner.

In a seventh step 170, the subsets of seismic data are combined ("stacked"), e.g. by simple averaging, to form composite microseismic data.

In an eighth step 180, the composite microseismic data is used to determine one or more models that describe one or more properties relating to the propagation of elastic waves from at least one source location (e.g. from each of a plurality of potential source locations) to a plurality of receivers. The one or more models may include a static model and/or a total travel-time model, for example.

The method may further include monitoring a hydraulic fracturing operation in an Earth formation using one or more models determined in the eighth step 180. This step may include using the one or more models to determine a source location for a microseismic event occurring underground from microseismic data obtained by a plurality of receivers, e.g. by calculating travel-times for elastic waves propagating from a plurality of potential source locations (e.g. arranged in a "grid" pattern) to each of the receiver locations.

The method shown in Fig. 2 may be implemented using the system shown in Fig. 1. In this case, the two or more microseismic events may be initiated using a perforation gun (not shown in Fig. 1) in the fracturing borehole 11 and the microseismic data obtained by the geophones in the geophone arrays 20, 22. The third-eighth steps 130-170 may be implemented by a suitably programmed computer (not shown).

It has been found by the inventor that using a simple move-out model in the fifth step 150 can cause minimal errors for small source-location separations. However, this error is expected to increase for larger source-location separations. It is therefore expected that applying a more accurate total travel-time model in the fifth step 150 would improve the composite microseismic data for large source-receiver offsets. As a consequence, the method shown in Fig. 2 could be used to test the accuracy of a given travel-time model.

It has also been found by the inventor that combining other fracture events, where the surface signal may be below the level of noise, with one or more stacked perforation shots, may help substantiate whether the fracture event is genuine signal and may also help to test a proposed fracture event location. This may include deriving an estimate of the perforation shot arrival time from the new combined signal for comparison to the arrival times that can be easily estimated for fracture events that have large signals, or large signal to noise ratio.

If the receivers are distributed vertically in shallow wells, the stacked perforation shots may improve the SNR and highlight potential intra-level statics and/or test a total travel-time model on longer offsets where the individual perforation signals are too weak to be detected individually.

### EXPERIMENTAL DATA

Experimental data was collected in a combined surface, shallow well, and deep well, hydraulic fracture monitoring field experiment.

This experiment involved six perforation shots, respectively, in each of a plurality of stages, wherein the six perforation shots in each stage each included 10, 10, 8, 8, 6, 6 charges per shot, respectively. The charges in each shot were spaced approximately at 2 inch intervals, with a total shot length of 10 to 18 inches. The perforation shots in each stage were approximately 80 ft apart, with each stage length totalling approximately 400 ft. The perforation shots were approximately 6500 ft below the surface.

Approximately 2000 receivers were used to obtain microseismic data corresponding to the six perforation shots in each stage. In this example, the receivers used were Z-component, accelerometers, placed at ground level, approximately 15 ft apart and arranged in 7 linear arrays, referred to herein as "lines". The lines were approximately linear but orientated in different directions and distributed over a large area such that some lines crossed each other and others did not. The lines deviated around surface obstacles where necessary.

Six subsets of the microseismic data were then identified, each subset corresponding to a respective perforation shot in a chosen perforation stage.

Fig. 3(a) and Fig. 3(b) respectively show subsets of microseismic data corresponding to two out of six perforation shots performed in the chosen perforation stage.

In Fig. 3(a) and Fig. 3(b), "IDENT_NUM" is a Record number which indicates a time of collection for the microseismic data. "ECT_LINE_ID" is a line number which indicates the line of receivers used to obtain the microseismic data. The portions of microseismic data corresponding to the different lines are separated by white space for clarity. "TRACE_NUM" is a receiver number, indicating the receiver used to obtain each signal in the microseismic data.

Fig. 3(a) shows the subset of microseismic data recorded on surface lines 2000-8000 (Record 11329) for perforation shot #1 (having 10 charges, which was the largest shot size).

Fig. 3(b) shows the subset of microseismic data recorded on surface lines 2000-8000 (Record 11341) for perforation shot #6 (having 6 charges, which was the smallest shot size).

The signal recorded at each receiver for each 4ms time bin during a short time period is plotted in each of Figs. 3-6 as a wiggle trace. The positive and negative amplitudes are displayed as a continuous wiggle form, with black and white portions of the trace, respectively.

The traces in Fig. 3(a) and Fig. 3(b) are plotted on a compressed horizontal plot scale to emphasis the coherent surface waveform signals caused by the perforation shots (at 0.900 and 5.400 seconds, respectively).

As can be seen from Fig. 3(a) and Fig. 3(b), even the strongest perforation shot signals recorded at the surface were weaker than the background noise for the majority of the receivers, so it was not possible to calculate accurate travel-time variations for all receiver locations.

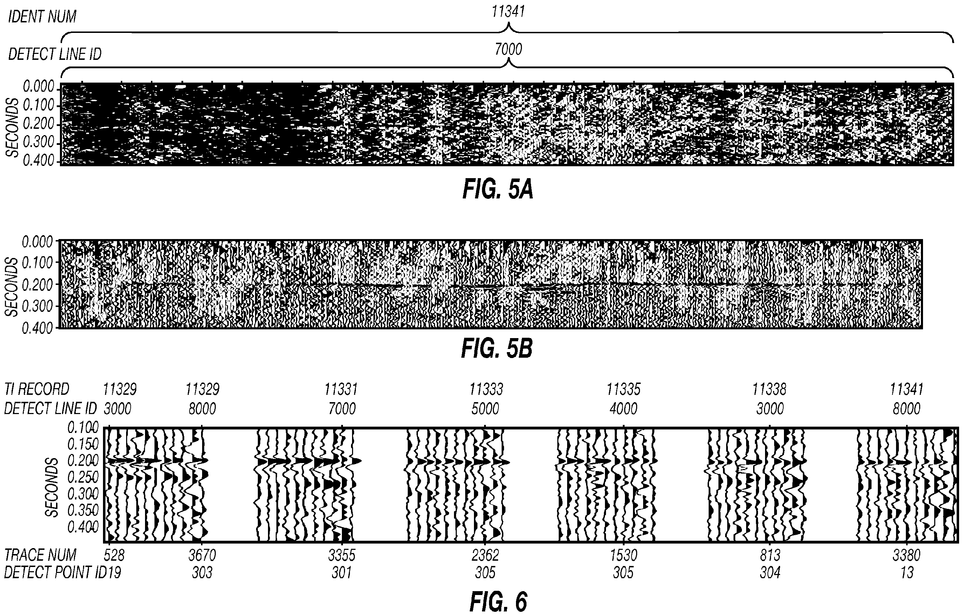

Thus, whilst the perforation shot signals are detectable from Fig. 3(a) and Fig. 3(b) as a whole, the perforation shots signals are not strong enough to allow determination of an accurate static model over the whole surface array of receivers. That this is the case is further exemplified by Fig. 5(a) (discussed below), which shows the actual SNR on a normal plot (uncompressed horizontal plot scale) of the traces for Line 7000.

The subsets of microseismic data were time-aligned, with travel-time adjustments being determined and then applied for each source-receiver combination, and the subsets of microseismic data stacked in accordance with the method described with respect to Fig. 2 above.

The specific method of stacking subsets of microseismic data in this experiment, which may be characterised as "weak event stacking", used two different sets of times: arrival times and travel-time adjustments.

Firstly, the arrival time at any convenient receiver location was determined and noted for each subset of microseismic data to be stacked. For this particular experiment, the arrival time for each subset of microseismic data was determined at a given receiver by observing a signal in the waveform received by that receiver.

Secondly, the known source locations and receiver locations were used to determine an approximate travel-time adjustment for each source-receiver combination, using a simple move-out model. This served to remove some or all of the move-out variation for each receiver due to the geometry. Note here that any residual "move-out" error would have remained in the combined waveform because it is similar for each of the sources if the source locations are relatively close.

After applying the travel-time adjustments to the subsets of microseismic data, and after using the arrival times to time-align the subsets so that the signal obtained by stacking the six weak (or "noisy") perforation shots occurred at an arbitrary time (in this case approximately 200ms), the subsets were stacked by simple averaging.

Fig. 4 shows "stacked" microseismic data formed by averaging the six perforation shots performed in the chosen perforation stage during the experiment.

As can be seen from Fig. 4, the signal has clearly been additively combined over a large part of the array which has led to an improvement in the SNR at longer source-receiver offsets In particular, the SNR is clearly improved on Lines 3000-5000, and 7000-8000 when compared to the individual subsets of microseismic data shown in Fig. 3(a) and Fig. 3(b).

Fig. 5(a) and Fig. 5(b) compare, for a subset of receivers used in the experiment (Line 7000):
(a) the "raw" subset of microseismic data obtained from a single perforation shot labelled "A" in Fig. 3(a); with
(b) the stacked microseismic data labelled "B" in Fig. 4.

As can be seen from Fig. 5(a) and Fig. 5(b), the stacked perforation signal can now be picked up over a significant part of the surface array, whereas this signal was not visible over a significant part of the surface array for any of the individual subsets of microseismic data, e.g. as shown in Fig. 3(a) and Fig. 3(b). Thus, the signal to noise ratio has been considerably improved.

The travel-time variations in the signal traces of the stacked microseismic data shown in Fig. 5(b) between receivers can be seen as representing the differences in travel-times of a signal from an assumed source to the receivers. These variations are mostly due to the consistent residual time-delay caused by localised (near-surface) variations at the plurality of receivers.

The travel-time variations in the signal traces of the stacked microseismic data shown in Fig. 4 were used to determine a static model that describes differences in travel-time for elastic waves propagating from the assumed source location (referred to above) to each of a plurality of receivers as a consequence of localised variations at the receivers. In practice, this static model can be obtained by methods well known in seismic and signal processing. In this particular example, the static model was determined by selecting a consistent part of the signal waveform on all traces from large-scale display of the traces. The waveform selection can be manual or automated using various properties of the waveforms or based on cross-correlating two or more traces, or other well-known methods.

This static model may be used e.g. to correct receiver-to-receiver travel-time variations caused by near-surface variations at each receiver location.

Next, a total travel-time model was determined from the static model by summing the static model and the simple move-out model referred to above. This total travel time model can be seen as accurately modelling signals from the assumed source location (referred to above) to each of the receiver locations. The total travel-time model derived in this way will be unique for this assumed source location, but in practice, it can be apportioned into many combinations of static and move-out models, and therefore used to produce a total travel-time model which describes total travel-times for elastic waves propagating from each of a plurality of potential source locations to each of the receivers. Variations in this total travel-time model could be evaluated in many ways, for instance, by comparing the signal alignment for the original perforation shot locations or additional perforation shots not included in the composite signal, or other signals. Preferably, the total travel-time model aligns signal arrivals for all receivers from many different source locations.

Here, it is to be noted that there are many well-known methods for deriving and evaluating the models discussed above, or indeed for deriving alternative models, from the stacked microseismic data. Such methods may, for instance, involve tomographic methods, or incorporating additional model depth and velocity information from, for example, conventional seismic surveys, VSP or sonic logs.

Fig. 6 contains six panels, each panel showing, for a respective perforation shot in the chosen perforation stage, eleven partial-stacks of microseismic data formed by stacking waveforms that have been corrected using the static model determined from the stacked data shown in Fig. 4.

In more detail, the static model determined from the stacked data shown in Fig. 4 was applied to the waveforms received by all of the receivers, e.g. so as to correct receiver-to-receiver travel-time variations caused by near-surface variations at each receiver location.

The receivers were grouped (arbitrarily) into eleven different receiver groups and, for the subset of microseismic data corresponding to each perforation shot in the chosen perforation stage, the waveforms (to which the static model had been applied) obtained by each receiver group were stacked to form eleven partial stacks.

Thus, each of the six panels shown in Fig. 6 contains eleven partial-stacks for the eleven receiver groups in the whole surface array for a respective one of the six perforation shots in the chosen perforation stage, with those six shots having 10, 10, 8, 8, 6, 6 charges per shot, respectively. As a consequence of the varying number of charges per shot, the signal amplitude can be seen as varying in proportion to the shot size.

The pattern of shot sizes shown in the six panels of Fig. 6 show that the static model determined from the stacked data shown in Fig. 4 is accurate for each individual shot as well as the combined shots. This demonstrates that an accurate static model can be determined entirely from a combination of weak signals that are individually too weak to be useful by themselves.

In practice, perforation shots are usually carried out in separate perforation stages, each perforation stage including a plurality of shots at a different depth underground (as was the case in the experiment described above). A static/total travel-time model calculated for one perforation stage may not necessarily work for another perforation stage, so a respective model may be determined for each adjacent perforation stage. The model determined for each adjacent perforation stages can then be used, for instance, in a fracture hypocentre location scanning process for that fracturing stage. Or, the separate models can be combined to form a single model. This model may be a single, spatially invariant and optimised model, or may be a spatially variant model. Developing a stage-dependent static/total travel-time model in this way is thought to provide an improved location scanning sensitivity.

When used in this specification and claims, the terms "comprises" and "comprising", "including" and variations thereof mean that the specified features, steps or integers are included. The terms are not to be interpreted to exclude the possibility of other features, steps or integers being present. Thus, for example, the methods described and claimed herein should not be interpreted to exclude the possibility of additional steps being performed that aren't discussed herein. Such additional steps may, for example, involve filtering, deconvolution and/or noise attenuation, which steps would be well known to a person skilled in the art.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention, as defined by the following claims:

### REFERENCES

*[1]* Kao H., and Shan S-J., 2004. The Source-Scanning Algorithm: mapping the distribution of seismic sources in time and space. Geophysical Journal International (2004) 157, 589-594
*[2]* Drew J., Leslie D., Armstrong P., Michaud G., 2005. Automated Microseismic Event Detection and Location by Continuous Spatial Mapping. SPE 95513, Annual Technical Conference & Exhibition, 2005*.*
*[3]* F. Waldhauser and W. L. Ellsworth, "A Double-Difference Earthquake Location Algorithm: Method and Application to the Northern Hayward Fault, California": Bulletin of the Seismological Society of America, 90, 6, pp. 1353-1368, December 2000*.*
*[4]* M. Fehler, W. S. Phillips, L. House, R. H. Jones, R. Aster, and C. Rowe, Short Notes: "Improved Relative Locations of Clustered Earthquakes Using Constrained Multiple Event Location": Bulletin of the Seismological Society of America, 90, 3, pp. 775-780, June 2000*.*
*[5]* C. A. Rowe, R. C. Aster, B. Borchers, and C. J. Young, "An Automatic, Adaptive Algorithm for Refining Phase Picks in Large Seismic Data Sets": Bulletin of the Seismological Society of America, Vol. 92, No. 5, pp. 1660-1674, June 2002
*[6] "*Developing a Velocity Structure Model for Microseismic Location Analysis", 2011, http://www.halliburton.com/public/pe/contents/Data_Sheets/web/H/H08452.pdf*.*
*[7]* C.W. Neuhaus and J.L. Miskimins, "Analysis of Surface and Downhole Microseismic Monitoring Coupled with Hydraulic Fracture Modeling in the Woodford Shale": SPE-154804, 2012*.*
*[8]* K. Chambers, S. Brandsberg-Dahl, J-M. Kendall, and J. Rueda, "Testing the Ability of Surface Arrays to monitor microseismic activity": Geophysical Prospecting, Volume 58-5, 2010*.*
*[9]* D. Abbott, C. Neale, J. Lakings, L. Wilson, J.C. Close, and E. Richardson, "Hydraulic Fracture Diagnostics In The Williams Fork Formation, Piceance Basin, Colorado Using Surface Microseismic Monitoring Technology": SPE-108142, 2007*.*

## Claims

1. A method of processing microseismic data obtained by a plurality of receivers, the method including:
initiating at least one of two or more microseismic events, the two or more microseismic events occurring underground at known source locations different to each other;
identifying (130) a plurality of subsets of the microseismic data, wherein each subset of the microseismic data corresponds, respectively, to one of the two or more microseismic events; for each combination of source location and receiver:
determining (150) a travel-time adjustment based on a spatial relationship between the source location and the receiver; and
applying (160) the travel-time adjustment to a waveform in a subset of the microseismic data that corresponds to the combination of source location and receiver; **characterised in that**:
at least one of the two or more microseismic events is a weak microseismic event whose magnitude is such that a signal caused by the arrival of an elastic wave created by that microseismic event is not discernible in all waveforms obtained by the receivers; and **in that** the method further comprises: summing (170) the adjusted subsets of microseismic data corresponding to the two or more microseismic events to form composite microseismic data.

2. A method according to claim 1, wherein the two or more microseismic events are initiated as part of a hydraulic fracturing process.

3. A method according to any of the preceding claim, wherein the composite microseismic data is used to process microseismic data from a hydraulic fracturing process to provide properties of a subsurface earth formation.

4. A method according to claim 1, wherein the travel-time adjustments are determined using a model that does not account for localised variations at the plurality of receivers.

5. A method according to claim 4, wherein the travel-time adjustments are determined using a move-out model that describes differences in travel-time for elastic waves propagating from at least one source location to each of a plurality of receivers as dependent on a spatial relationship between source location and receiver location.

6. A method according to claim 1, wherein:
the travel-time adjustments are determined using a model that accounts for localised variations at the plurality of receivers; and
the method includes using the composite microseismic data to test the accuracy of the model.

7. A method according to any previous claim, wherein the average distance between known source locations is 10% or less of the average distance between the known source locations and the plurality of receivers.

8. A method according to any previous claim, wherein the method includes using the composite microseismic data to determine one or more models that describe one or more properties relating to the propagation of elastic waves from at least one source location to a plurality of receivers.

9. A method according to claim 8, wherein the one or more models include:
a static model which describes differences in travel-time for elastic waves propagating from at least one source location to each of a plurality of receivers as a consequence of localised variations at the plurality of receivers; and/or
a total travel-time model which describes total travel-times for elastic waves propagating from at least one source location to each of a plurality of receivers.

10. A method according to any previous claim, wherein the method includes time-aligning the subsets of microseismic data, wherein time aligning the subsets of microseismic data includes:
for each subset of microseismic data, determining an arrival time at one or more of the receivers for an elastic wave caused by the microseismic event to which the subset of microseismic data corresponds; and
time-aligning the subsets of microseismic data based on the determined arrival times.

11. A method of obtaining and processing microseismic data, wherein the method includes:
using a plurality of receivers to obtain microseismic data corresponding to two or more microseismic events occurring underground, wherein each microseismic event occurs, respectively, at a known source location; and
processing the microseismic data using a method according to any previous claim.

12. A method according to any previous claim, wherein at least one of the two or more microseismic events is a perforation shot.

## Patentansprüche

1. Verfahren zum Verarbeiten von mikroseismischen Daten, die von mehreren Empfängern erhalten werden, wobei das Verfahren umfasst:
Initiieren wenigstens eines von zwei oder mehr mikroseismischen Ereignissen, wobei die zwei oder mehr mikroseismischen Ereignisse unterirdisch an bekannten, voneinander verschiedenen Quellorten stattfinden;
Identifizieren (130) mehrerer Teilmengen der mikroseismischen Daten, wobei jede Teilmenge der mikroseismischen Daten jeweils einem der zwei oder mehr mikroseismischen Ereignisse entspricht;
für jede Kombination von Quellort und Empfänger:
Ermitteln (150) einer Laufzeitanpassung basierend auf einer räumlichen Beziehung zwischen dem Quellort und dem Empfänger; und
Anwenden (160) der Laufzeitanpassung auf eine Wellenform in einer Teilmenge der mikroseismischen Daten, die der Kombination von Quellort und Empfänger
entspricht;
**dadurch gekennzeichnet, dass**:
wenigstens eines der zwei oder mehr mikroseismischen Ereignisse ein schwaches mikroseismisches Ereignis ist, dessen Stärke derart ist, dass ein Signal, das vom Eintreffen einer durch dieses mikroseismische Ereignis erzeugten elastischen Welle verursacht wird,
nicht in allen von den Empfängern erhaltenen Wellenformen wahrnehmbar ist; und dass das Verfahren ferner umfasst:
Summieren (170) der angepassten Teilmengen von mikroseismischen Daten, die den zwei oder mehr mikroseismischen Ereignissen entsprechen, um zusammengesetzte mikroseismische Daten auszubilden.

2. Verfahren gemäß Anspruch 1, wobei die zwei oder mehr mikroseismischen Ereignisse als Teil eines hydraulischen Frac-Prozesses initiiert werden.

3. Verfahren gemäß einem der vorhergehenden Ansprüche, wobei die zusammengesetzten mikroseismischen Daten dazu verwendet werden, mikroseismische Daten aus einem hydraulischen Frac-Prozess zu verarbeiten, um Eigenschaften einer unterirdischen Erdformation bereitzustellen.

4. Verfahren gemäß Anspruch 1, wobei die Laufzeitanpassungen unter Verwendung eines Modells ermittelt werden, das lokalisierte Variationen an den mehreren Empfängern nicht berücksichtigt.

5. Verfahren gemäß Anspruch 4, wobei die Laufzeitanpassungen unter Verwendung eines Move-Out-Modells ermittelt werden, das Laufzeitunterschiede für elastische Wellen, die sich von wenigstens einem Quellort zu jedem von mehreren Empfängern fortpflanzen, als von einer räumlichen Beziehung zwischen Quellort und Empfängerort abhängig beschreibt.

6. Verfahren gemäß Anspruch 1, wobei:
die Laufzeitanpassungen unter Verwendung eines Modells ermittelt werden, das lokalisierte Variationen an den mehreren Empfängern berücksichtigt; und
das Verfahren ein Verwenden der zusammengesetzten mikroseismischen Daten zum Prüfen der Genauigkeit des Modells umfasst.

7. Verfahren gemäß einem der vorhergehenden Ansprüche, wobei die durchschnittliche Entfernung zwischen bekannten Quellorten 10% oder weniger der durchschnittlichen Entfernung zwischen den bekannten Quellorten und den mehreren Empfängern beträgt.

8. Verfahren gemäß einem der vorhergehenden Ansprüche, wobei das Verfahren ein Verwenden der zusammengesetzten mikroseismischen Daten zum Ermitteln eines oder mehrerer Modelle umfasst, die eine oder mehrere sich auf das Fortpflanzen elastischer Wellen von wenigstens einem Quellort zu mehreren Empfängern beziehende Eigenschaften beschreiben.

9. Verfahren gemäß Anspruch 8, wobei das eine oder die mehreren Modelle umfassen:
ein statisches Modell, das Laufzeitunterschiede für elastische Wellen, die sich von wenigstens einem Quellort zu jedem von mehreren Empfängern fortpflanzen, als Folge lokalisierter Variationen an den mehreren Empfängern beschreibt; und/oder
ein Gesamtlaufzeitmodell, das Gesamtlaufzeiten für elastische Wellen, die sich von wenigstens einem Quellort zu jedem von mehreren Empfängern fortpflanzen, beschreibt.

10. Verfahren gemäß einem der vorhergehenden Ansprüche, wobei das Verfahren ein zeitliches Ausrichten der Teilmengen von mikroseismischen Daten umfasst, wobei das zeitliche Ausrichten der Teilmengen von mikroseismischen Daten umfasst:
für jede Teilmenge von mikroseismischen Daten eine Eintreffzeit an einem oder mehreren der Empfänger für eine vom mikroseismischen Ereignis, dem die Teilmenge von mikroseismischen Daten entspricht, verursachte elastische Welle zu ermitteln; und
zeitliches Ausrichten der Teilmengen von mikroseismischen Daten basierend auf den ermittelten Eintreffzeiten.

11. Verfahren zum Erhalten und Verarbeiten von mikroseismischen Daten, wobei das Verfahren umfasst:
Verwenden mehrerer Empfänger zum Erhalten von mikroseismischen Daten, die zwei oder
mehr unterirdisch stattfindenden mikroseismischen Ereignissen entsprechen, wobei jedes mikroseismische Ereignis jeweils an einem bekannten Quellort stattfindet; und
Verarbeiten der mikroseismischen Daten unter Verwendung eines Verfahrens nach einem der vorhergehenden Ansprüche.

12. Verfahren gemäß einem der vorhergehenden Ansprüche, wobei wenigstens eines der zwei oder mehr mikroseismischen Ereignisse ein Perforationsschuss ist.

## Revendications

1. Procédé de traitement des données microsismiques obtenues par une pluralité de récepteurs, le procédé consistant à :
lancer au moins l'un de deux événements microsismiques ou plus, les deux événements microsismiques ou plus se produisant sous terre à des emplacements de source connus différents l'un de l'autre ;
identifier (130) une pluralité de sous-ensembles des données microsismiques, dans lesquels chaque sous-ensemble des données microsismiques correspond, respectivement, à l'un des deux événements microsismiques ou plus ; pour chaque combinaison d'emplacement de source et de récepteur :
déterminer (150) un ajustement de temps de trajet sur la base d'une relation spatiale entre l'emplacement de source et le récepteur ; et
appliquer (160) l'ajustement de temps de trajet à une forme d'onde dans un sous-ensemble des données microsismiques qui correspond à la combinaison d'emplacement de source et de récepteur ; **caractérisé en**
**ce que** :
au moins un des deux événements microsismiques ou plus est un événement microsismique faible dont l'amplitude est telle qu'un signal provoqué par l'arrivée d'une onde élastique créée par cet événement microsismique n'est pas discernable dans toutes les formes d'onde obtenues par les récepteurs ; et **en ce que** le procédé consiste en outre à :
sommer (170) les sous-ensembles ajustés de données microsismiques correspondant aux deux événements microsismiques ou plus pour former des données microsismiques composites.

2. Procédé selon la revendication 1, dans lequel les deux événements microsismiques ou plus sont lancés comme faisant partie d'un processus de fracturation hydraulique.

3. Procédé selon l'une quelconque des revendications précédentes, dans lequel les données microsismiques composites sont utilisées pour traiter des données microsismiques à partir d'un processus de fracturation hydraulique dans le but de fournir les propriétés d'une formation terrestre souterraine.

4. Procédé selon la revendication 1, dans lequel les ajustements de temps de trajet sont déterminés à l'aide d'un modèle qui ne tient pas compte de variations localisées au niveau de la pluralité de récepteurs.

5. Procédé selon la revendication 4, dans lequel les ajustements de temps de trajet sont déterminés à l'aide d'un modèle de courbure qui décrit les différences de temps de trajet pour les ondes élastiques se propageant à partir d'au moins un emplacement de source vers chacun d'une pluralité de récepteurs en fonction d'une relation spatiale entre l'emplacement de source et l'emplacement de récepteur

6. Procédé selon la revendication 1, dans lequel :
les ajustements de temps de trajet sont déterminés à l'aide d'un modèle qui tient compte de variations localisées au niveau de la pluralité de récepteurs ; et
le procédé inclut l'utilisation des données microsismiques composites pour tester la précision du modèle.

7. Procédé selon l'une quelconque des revendications précédentes, dans lequel la distance moyenne entre des emplacements de sources connus est 10 % ou moins de la distance moyenne entre les emplacements de sources connus et la pluralité de récepteurs.

8. Procédé selon l'une quelconque des revendications précédentes, dans lequel le procédé inclut l'utilisation des données microsismiques composites pour déterminer un ou plusieurs modèles qui décrivent une ou plusieurs propriétés relatives à la propagation d'ondes élastiques à partir d'au moins un emplacement de source vers une pluralité de récepteurs

9. Procédé selon la revendication 8, dans lequel le ou les modèles comprennent :
un modèle statique qui décrit des différences de temps de trajet des ondes élastiques se propageant à partir d'au moins un emplacement de source vers chacun d'une pluralité de récepteurs en conséquence de variations localisées au niveau de la pluralité de récepteurs ; et/ou
un modèle de temps de trajet total qui décrit des temps de trajet totaux pour des ondes élastiques se propageant à partir d'au moins un emplacement de source vers chacun d'une pluralité de récepteurs.

10. Procédé selon l'une quelconque des revendications précédentes, dans lequel le procédé comprend l'alignement en temps des sous-ensembles de données microsismiques, l'alignement en temps des sous-ensembles de données microsismiques consistant à :
pour chaque sous-ensemble de données microsismiques, déterminer un temps d'arrivée au niveau d'un ou plusieurs des récepteurs pour une onde élastique provoquée par l'événement microsismique auquel correspond le sous-ensemble de données microsismiques ; et
aligner en temps les sous-ensembles de données microsismiques sur la base des temps d'arrivée déterminés.

11. Procédé d'obtention et de traitement des données microsismiques, dans lequel le procédé consiste à :
utiliser une pluralité de récepteurs pour obtenir des données microsismiques correspondant à deux événements microsismiques ou plus se produisant sous terre, chaque événement microsismique se produisant, respectivement, à un emplacement de source connu; et
traiter les données microsismiques à l'aide d'un procédé selon l'une quelconque des revendications précédentes.

12. Procédé selon l'une quelconque des revendications précédentes, dans lequel au moins l'un des deux événements microsismiques ou plus est un tir de perforation.
